# EUROPEAN PATENT APPLICATION

(11) **EP 4 434 665 A2**
(43) Date of publication of application: **25.09.2024**
(21) Application number: 24165685.9
(22) Date of filing: 22.03.2024
(51) Int. Cl.: B23K 9/133, B23K 9/173

(54) **SYSTEMS AND METHODS FOR UTILIZING WEARABLE WIRE FEEDERS**

(30) Priority: 24.03.2023 US 202363454524 P; 21.03.2024 US 202418612050
(71) Applicant: Illinois Tool Works Inc., Glenview IL 60025 (US)
(72) Inventor: MARCUSEN, David, Glenview, 60025 (US); GILL, Samuel, Glenview, 60025 (US); LEITERITZ, Nathan, Glenview, 60025 (US); SICKELS, Darrell, Glenview, 60025 (US)
(74) Representative: HGF

(57) **Abstract**

Systems and methods are provided for utilizing wearable wire feeders. An example welding-type system may include a wire feeder device (12)configured for operation in conjunction with a welding-type power supply unit and a welding-type torch (30), with the wire feeder device being a physically separate component from both of the welding-type power supply unit and the welding-type torch, and with the wire feeder device including, at least, a wire source configured to provide electrode wire, and a wire feeding mechanism configured to feed the electrode wire from the wire source. The wire feeder device (12) may be powered by the welding-type power supply unit, and the wire feeder device may be configured to feed the electrode wire to the welding-type torch.

## Description

### CLAIM OF PRIORITY

This patent application claims priority to and claims benefit from United States Provisional Patent Application Serial No. 63/454,524, filed on Mar. 24, 2023. The above identified applications is hereby incorporated herein by reference in its entirety.

### BACKGROUND

Welding has become increasingly ubiquitous. Welding can be performed in an automated manner or in a manual manner (e.g., being performed by a human). Equipment or components used during welding operations may be driven using engines. For example, engines may be used to drive, for example, generators, power sources, etc. used during welding operations.

Conventional welding-type setups and/or systems may have some limitations and/or disadvantages, however. For example, some welding-type setups and/or systems may restrict the lead distance between the main driving components with the location where the welding operation is performed.

Further limitations and disadvantages of conventional approaches will become apparent to one skilled in the art, through comparison of such approaches with some aspects of the present systems and methods set forth in the remainder of this disclosure with reference to the drawings.

### BRIEF SUMMARY

Aspects of the present disclosure relate to welding solutions. More specifically, various implementations in accordance with the present disclosure are directed to systems and methods for utilizing wearable wire feeders, substantially as illustrated by or described in connection with at least one of the figures, and as set forth more completely in the claims.

These and other advantages, aspects and novel features of the present disclosure, as well as details of an illustrated implementation thereof, will be more fully understood from the following description and drawings.

### BRIEF DESCRIPTION OF THE DRAWINGS

FIG. 1 shows an example welding-type setup that may be used for welding-type operations.
FIG. 1B shows an example metal inert gas (MIG) welding based setup that may be used for MIG based welding-type operations.
FIG. 1C illustrated alternative example arrangements for incorporating a wearable wire feeder.
FIG. 2 illustrates an example wearable wire feeder and use thereof in an example welding-type setup.
FIG. 3 illustrates an example wearable wire feeder and use thereof in an example welding-type setup.
FIG. 4 illustrates an example wearable wire feeder during example use thereof.
FIG. 5 illustrates an example engagement for engaging a wearable wire feeder during use thereof.
FIG. 6 illustrates an example use of a wearable wire feeder demonstrating reposition-ability of the wearable wire feeder.
FIG. 7 illustrates an example use of a wearable wire feeder demonstrating limiting of reduction in bend radius of torch connector when moving the wearable wire feeder.

### DETAILED DESCRIPTION

As utilized herein, the terms "circuits" and "circuitry" refer to physical electronic components (e.g., hardware), and any software and/or firmware ("code") that may configure the hardware, be executed by the hardware, and/or otherwise be associated with the hardware. As used herein, for example, a particular processor and memory (e.g., a volatile or non-volatile memory device, a general computer-readable medium, etc.) may comprise a first "circuit" when executing a first one or more lines of code and may comprise a second "circuit" when executing a second one or more lines of code. Additionally, a circuit may comprise analog and/or digital circuitry. Such circuitry may operate, for example, on analog and/or digital signals. It should be understood that a circuit may be in a single device or chip, on a single motherboard, in a single chassis, in a plurality of enclosures at a single geographical location, in a plurality of enclosures distributed over a plurality of geographical locations, etc. Similarly, the term "module" may, for example, refer to a physical electronic components (e.g., hardware) and any software and/or firmware ("code") that may configure the hardware, be executed by the hardware, and/or otherwise be associated with the hardware.

As utilized herein, circuitry or module is "operable" to perform a function whenever the circuitry or module comprises the necessary hardware and code (if any is necessary) to perform the function, regardless of whether performance of the function is disabled or not (e.g., by a user-configurable setting, factory trim, etc.).

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." As utilized herein, the term "exemplary" means serving as a non-limiting example, instance, or illustration. As utilized herein, the terms "for example" and "e.g." set off lists of one or more non-limiting examples, instances, or illustrations.

Welding-type power, as used herein, refers to power suitable for welding, plasma cutting, induction heating, CAC-A (carbon arc cutting/air) and/or hot wire welding/preheating (including laser welding and laser cladding). Welding-type power supply, as used herein, refers to a power supply that can provide welding-type power. A welding-type power supply may include power generation components (e.g., engines, generators, etc.) and/or power conversion circuitry to convert primary power (e.g., engine-driven power generation, mains power, etc.) to welding-type power.

Welding-type operations, as used herein, comprise operations in accordance with any known welding technique, including flame welding techniques such as oxy-fuel welding, electric welding techniques such as shielded metal arc welding (e.g., stick welding), metal inert gas (MIG) welding, tungsten inert gas (TIG) welding, resistance welding, as well as gouging (e.g., carbon arc gouging), cutting (e.g., plasma cutting), brazing, induction heating, soldering, and/or the like.

Welding-type setup, as used herein, refers to any setup comprising welding related devices or equipment (e.g., welding power sources, welding torch, welding gear such as headwear and the like, auxiliary devices or systems, etc.) which are used in facilitating and/or in conjunction with welding-type operations.

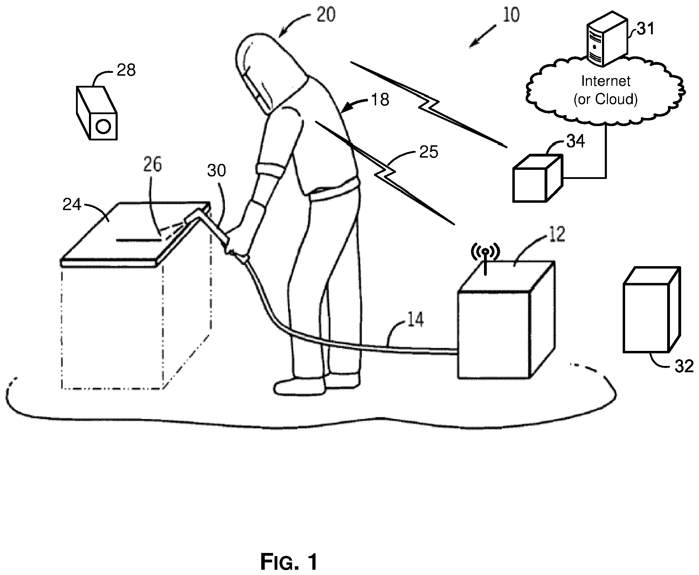

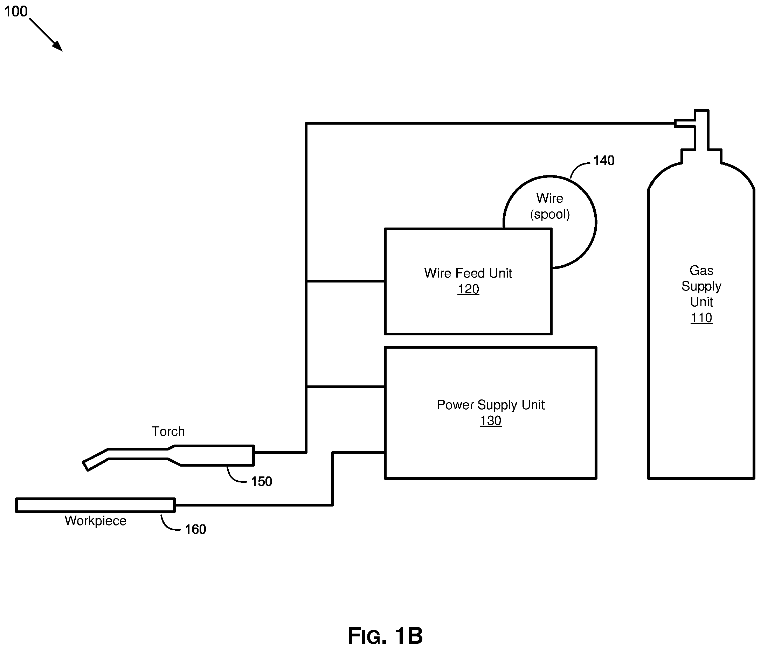

FIG. 1 shows an example welding-type setup that may be used for welding-type operations. Referring to FIG. 1, there is shown an example welding-type setup 10 in which an operator (user) 18 is wearing welding headwear 20 and welding a workpiece 24 using a torch 30 to which power is delivered by equipment 12 via a conduit 14, with weld monitoring equipment 28, which may be available for use in monitoring welding operations. The equipment 12 may comprise a power source, optionally a source of a shield gas and, where wire/filler material is to be provided automatically, a wire feeder. Further, in some instances an engine 32 may be used to drive equipment or components used during welding operations. The engine 32 may comprise a gas engine or a liquefied petroleum (LP) engine. The engine 32 may drive generators, power sources, etc. used during welding operations.

The welding-type setup 10 of FIG. 1 may be configured to form a weld joint by any known welding-type technique. For example, optionally in any implementation, the welding equipment 12 may be arc welding equipment that provides a direct current (DC) or alternating current (AC) to a consumable or non-consumable electrode of a torch 30. The electrode delivers the current to the point of welding on the workpiece 24. In the welding-type setup 10, the operator 18 controls the location and operation of the electrode by manipulating the torch 30 and triggering the starting and stopping of the current flow. In other implementations, a robot or automated fixture may control the position of the electrode and/or may send operating parameters or trigger commands to the welding system. When current is flowing, an arc 26 is developed between the electrode and the workpiece 24. The conduit 14 and the electrode thus deliver current and voltage sufficient to create the electric arc 26 between the electrode and the workpiece. The arc 26 locally melts the workpiece 24 and welding wire or rod supplied to the weld joint (the electrode in the case of a consumable electrode or a separate wire or rod in the case of a non-consumable electrode) at the point of welding between electrode and the workpiece 24, thereby forming a weld joint when the metal cools.

Optionally in any implementation, the weld monitoring equipment 28 may be used to monitor welding operations. The weld monitoring equipment 28 may be used to monitor various aspects of welding operations, particularly in real-time (that is as welding is taking place). For example, the weld monitoring equipment 28 may be operable to monitor arc characteristics such as length, current, voltage, frequency, variation, and instability. Data obtained from the weld monitoring may be used (e.g., by the operator 18 and/or by an automated quality control system) to ensure proper welding.

As shown, the equipment 12 and headwear 20 may communicate via a link 25 via which the headwear 20 may control settings of the equipment 12 and/or the equipment 12 may provide information about its settings to the headwear 20. Although a wireless link is shown, the link may be wireless, wired, or optical.

Optionally in any implementation, equipment or components used during welding operations may be driven using engines. For example, the engine 32 may drive generators, power sources, etc. used during welding operations. In some instances, it may be desired to obtain information relating to used engines. For example, data relating to engines (and operations thereof) used during welding operations may be collected and used (e.g., based on analysis thereof) in monitoring and optimizing operations of these engines. The collection and use of such data may be performed telematically-that is, the data may be collected locally, subjected to at least some processing locally (e.g., formatting, etc.), and then may be communicated to remote management entities (e.g., centralized management locations, engine providers, etc.), using wireless technologies (e.g., cellular, satellite, etc.).

Optionally in any implementation, a dedicated controller (e.g., shown as element 34 in FIG. 1) may be used to control, centralize, and/or optimize data handling operations. The controller 34 may comprise suitable circuitry, hardware, software, or any combination thereof for use in performing various aspects of the engine related data handling operations. For example, the controller 34 may be operable to interface with the engine 32 to obtain data related thereto. The controller 34 may track or obtain welding related data (e.g., from weld monitoring equipment 28, from equipment 12, etc.). The controller 34 may then transmit the data (e.g., both engine related and weld related data), such as to facilitate remote monitoring and/or management, by way of wireless communications. This may be done using cellular and or satellite telematics hardware, for example.

In some example implementations, welding-type systems or setups, such as the welding-type setup 10, may be configured for collecting and reporting data relating to welding-type operations and/or to functions or components utilized during welding-type operations. For example, data from welding processes, power sources, welding-related accessories etc. in a weld setup may be collected. In this regard, the collected data may comprise, for example, current, voltage, wire feed speed, weld states, and numerous other power source parameters and settings.

The collected data may then be sent to remote entities (e.g., a remote server 31, which may be a manufacturer-controlled, Internet-based cloud server) and/or to local systems or devices (e.g., local PC, a tablet, a smartphone, etc.). The collected data may be utilized in enhancing welding-related systems and/or operations. For example, manufacturers may utilize the collected data to identify issues (and correct them) and/or devise modifications or improvements in the various components. Further, users may be able to generate reports on collected data to measure, document, and improve their processes.

FIG. 1B shows an example metal inert gas (MIG) welding based setup that may be used for MIG based welding-type operations. Referring to FIG. 1B, there is shown an example welding-type setup 100. In this regard, the welding-type setup 100 represents an example metal inert gas (MIG) welding based implementation of the welding-type setup 10 of FIG. 1. In particular, in the simplified implementation depicted in FIG. 1B, the MIG based welding-type setup 100 comprises a gas supply unit 110, a power supply unit 120, and a welding torch (gun) 160. As shown, the power supply unit 120 comprises a weld power source 130, a wire feeder unit 140, and a wire source (e.g., wire spool) 150. Nonetheless, the disclosure is not limited to such arrangement, and as such, some of the components of the power supply unit 120 as shown in FIG. 1B-namely, the wire feeder unit 140 and/or the wire source 150-may be separate physical components.

In operation, the welding-type setup 100 may be used to apply MIG based welds, such to a workpiece 170. In this regard, in MIG based welding, a consumable electrode wire is fed from the wire source 150, via the wire feeder unit 140, through the torch 160, as an electric arc is formed between the consumable electrode wire and the workpiece 170 as a current is supplied by the power supply unit 120 to both of the torch 160 and the workpiece 170, with the weld power source 130 providing that power, as well as providing power to other components of the power supply unit 120, such as to the wire feeder unit 140 to facilitate the wire feeding thereby. The arc heats the workpiece metal(s) and the consumable electrode wire, causing them to melt and join, forming the weld. Further, along with the wire electrode, a shielding gas is fed from the gas supply unit 110 through the torch 160, to shield the weld (e.g., from atmospheric contamination). In this regard, as illustrated in FIG. 1B a single connector between the power supply unit 120 and the welding torch (gun) 160 may be used to provide the electrode wire, the shielding gas, and power from the power supply unit 120 to the welding torch (gun) 160. Nonetheless, the disclosure is not limited to such design, and as such in some implementations separate dedicated connectors may be used providing one or more of the electrode wire, the shielding gas, and power.

Use of MIG based welding may pose some challenges and/or may have some limitations, however. In this regard, one of the main limitations when using MIG based welding is the distance between the power source (e.g., the combination of the gas supply unit 110, the wire feeder unit 140, the power supply unit 120, and the wire source 150) and the work site-that is, where the weld is being applied, such as the location of the workpiece 170. In particular, one of the limitations and/or challenges when using MIG guns is the maximum distance (or lead) from the work site to the power source that the user may move without needing to re-position the power source. The typical lead in the industry for a single drive system is ~10 ft. However, in many instances users may desire a longer lead on the gun; providing such longer lead may not be feasible in conventional setups, however.

For example, the challenge with providing longer gun lead is limiting what wire diameter that can be pushed through longer lead, which may increase the friction between the liner and the wire. Such increased friction may force the users to increase the tension on the drive roll. However, the increased tension may in turn cause some issues. For example, the increased tension may deform the wire cross section. Also, with the increase friction and tension may cause the wire to collapse and start nesting inside the drive compartment. In addition, the wire material may affect the lead distance, and thus may be another limiting factor. For example, achieving longer leads with aluminum based wires may be particularly challenging because of the limited column strength of aluminum. In this regard, the column strength of aluminum may limit how much aluminum wire can be pushed-e.g., allowing for only a short lead distance before issues may occur, such as the aluminum wire binding up inside with the liner.

Some solutions have been developed to address this issue. One such solution is the spool gun, which incorporates a wire source (e.g., 4 inch spool) and wire feeding mechanism) attached directly to the gun. Another solution that have been utilized is the push-pull gun which pulls the wire out from the power source and pushes it through the gun. Both of these approaches and designs may have challenges and/or limitations, however. For example, the spool gun typically may be very big and bulky, and may have wire feeding issues, such as with particular wire material (e.g., aluminum) that may cause the wire to bind up in the liner, so there are maintenance concerns when operating them. Also, use of spool guns may be challenging and undesirable due to the strain use of such gun may have on the user (e.g., causing strain on the user's wrist). In addition, size and shape of the spool gun may also limit the user from getting into tight spaces. While the push-pull gun may be lighter and smaller in size, such guns may be expensive and may impose strict operation requirements-e.g., the feeding mechanism/components (e.g., motors) in the two devices (the push-pull gun and the supply unit) have to be synchronized and must operate in harmony to ensure proper feeding of the wire since the push-pull gun needs to pull the wire from the power supply unit and then push it in synchronized manner (e.g., the motors must operate at the same rate of speed, to prevent jamming).

Solutions based on the present disclosure allow for longer leads while overcoming the limitations of many existing conventional solutions. In particular, solutions based on the present disclosure may incorporate use of shorter versions of a MIG gun, with the wire drive system-that is, combination of the wire spool and the feeding mechanism-being configured to enable feeding the wire with bigger leads. This may be done by separating the wire drive system from the power supply and placing it closer to the work site. Thus, in the welding-type setup 100, for example, the combination of the wire roll 150 and the wire-feed unit 140 in the welding-type setup 100 may be separated from the remaining part of the power supply in the welding-type setup 100-that is, the power supply unit 120 and the gas supply unit 110, and placed closer to the work site.

In various example implementations based on the present disclosure, a wire feeder (referred to as "wearable wire feeder" even in instances where it may not be worn by the user) may be provided as a separate physical device, which may incorporate the wire drive system, and may be configured for use in suitable welding-type setups, to provide longer leads. In this regard, such wire feeder may be configured to connect to the power supply on one end, via first connecter(s), and to the torch (e.g., MIG gun) on the end, via second connector(s), thus allowing for greater distances between the torch and the power supply than is possible in conventional setups. The wire feeder may also be configured to be wearable by the user. The proposed wearable wire feeder/drive systems may also address various issues associated with any existing solutions as described herein.

In some example implementations, a MIG gun may be used with the proposed wearable wire feeder, which may be a separate/independent wire feeder/drive system containing wire spool (e.g., a 4 inch spool) that may be located at and thus allowing some separation (e.g., ~4-6 ft.) from the nozzle of the MIG gun. In this regard, a liner may be only needed for the part/connection between the wire feeder/drive system and the MIG gun. The wire feeder/drive system is then connected to a power supply system, such as using a spool gun cable, which may be long (e.g., ~20 ft. or greater).

In some example implementations, the proposed wire feeder/drive system may be designed in such a way to allow it to be worn or otherwise attached to the user, such as using a holster or strapping system. Such holster or strapping system may be configured to engage or work with existing tool belts. Nonetheless, the disclosure is not limited to such approach-that is, where it has to be wearable by the user, being attached to or holstered by the user, and as such in some implementations the wire feeder/drive system instead may be configured to be placed off of the user's body-e.g., secured or holstered to something else, such as a fixed structure or object (e.g., a dedicated stand, or any available structure or object, such as a desk or a railing) near the work site. In such implementations, a simple hook-like attachment arrangement may be used. Where the wire feeder/drive system is configured to allow it to be attached to or holstered by the user, the wire feeder/drive system may be configured such that it would allow the user to easily detach the system.

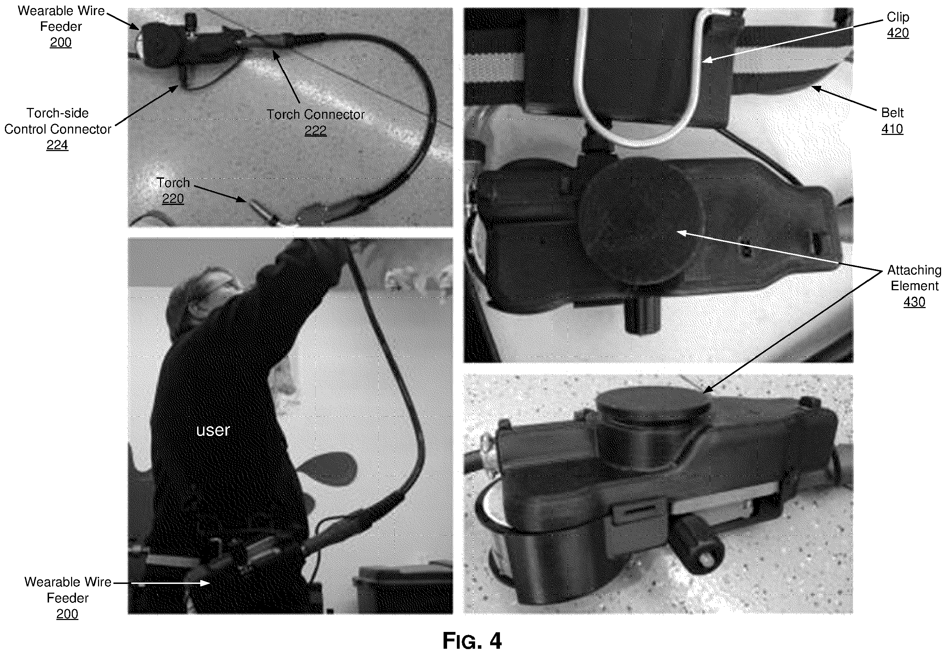

The attaching mechanism may also be configured to optimize or enhance operation. For example, the holster or strapping system may be configured such that the feeder system may be rotatable and repositionable. The holster or strapping system also may be configured or designed to facilitate (e.g., in combination with the wearable wire feeder) maintaining the bend radius, or at least to limit any reduction in the bend radius. In this regard, limiting the reduction in the bend radius may be desirable as a tighter bend radius may result in difficulty in feeding the wire to the nozzle of the torch/gun. For example, the proposed wearable wire feeder/drive systems may address the issue of wire wobbling, which may occur in particular in spool guns. In this regard, because the nozzle is very close to the spool in spool guns, wire may wobble as it comes out of the nozzle. The wobbling is caused by the helix of the wire coming out of the spool, because with the nozzle being so close to the spool, the wire does not have time to straighten up. The extra distance allowed when using the proposed wearable wire feeder/drive systems may provide sufficient margin to compensate for the wobbling issue. As such, allowing movement in the attaching mechanism may allow for maintaining the bend radius, or at least to limit any reduction in the bend radius. This is illustrated in FIGS. 4 and 7.

Accordingly, solutions based on the present disclosure, and systems associated therewith, may have various advantages over conventional solutions (if any existed) and/or may address various issues associated with any such conventional solutions, as described herein. In particular, the proposed solutions and systems associated therewith, incorporating separate wire feeder/drive systems as described herein, allow for extended lead length with reduced concern of pushing thinner gauge and alternate material like aluminum. Further, the proposed solutions and systems associated therewith allow for use of conventional torches (MIG guns), which in turn allows for and ensures light weight on wrist, which would be advantageous to the users. In addition, shorter lead used between the torch (MIG gun) and the separate wire feeder/drive system allows for straightening of wire to prevent wire whipping when the electrode sticks out. Thus, use of solutions incorporating the separate wire feeder/drive systems as described herein may allow for improving dexterity, and/or for welding in tighter areas and/or confined spaces.

The proposed solutions also have the advantage of allowing for (re-)use of common consumables of MIG guns. The holstering systems (or features) that may be used in conjunction with the separate wire feeder/drive systems described herein may also offer additional advantages, such as allowing the user to easily remove the wire feeder/drive system (if necessary). These holstering systems (or features) may also allow the drive system to rotate in position to allow a larger bend radius. In some instances, where the bolstering systems (or features) may be hook-based designs, these holstering systems (or features) may be further develop to allow holding the wire feeder/drive system off the body of the user, such as where the user may not want to, or may not be able wear the wire feeder/drive system (e.g., when welding in confined spaces). The proposed solutions and systems associated therewith may also be backwards compatible with existing, welding related systems.

As should be readily appreciated, operating the proposed wearable wire feeder/drive systems does not entail the strict and complex operation requirements when using push-pull guns-e.g., there is no requirement to synchronize with the power supply unit. Further, the proposed wearable wire feeder/drive systems may address such as issues of wire wobbling, which may occur in spool guns. In this regard, because the nozzle is very close to the spool in spool guns, wire may wobble as it comes out of the nozzle. The wobbling is caused by the helix of the wire coming out of the spool, because with the nozzle being so close to the spool, the wire does not have time to straighten up. The extra distance allowed between the nozzle and the wire source (e.g., spool) when using the proposed wearable wire feeder/drive systems may provide sufficient margin to compensate for such wobbling issues.

Further, use of the proposed wearable wire feeder/drive systems may be particularly desirable with certain wire material, such as aluminum. In this regard, as noted above, use of aluminum wire may pose certain challenges, because on one hand column strength of aluminum limit how much aluminum wire can be pushed-e.g., you can only push a short distance before issues may occur, such as the aluminum wire binding up inside with the liner. The use of separate wire feeder/drive system(s) based on the present disclosure may address some of these issues, by allowing for use of short guns (e.g., ~3-4 ft.) so that aluminum wires may be used and pushed through the MIG gun while still providing longer leads in the setup as a whole.

In some example implementations, an alternate design may be used, with the wire source (e.g., wire spool) being separated from and made external to the wire feeding mechanism in the proposed wire feeder/drive systems. For example, the wire spool may be kept in the power source, and routed to the wire feeder/drive system. Alternatively, a separate (dedicated) wire spool may be used, configured to be coupled to the wire feeder/drive system, which would only include the wire feeding mechanism. These various alterative arrangements are illustrated and described with respect to FIG. 1C. Moving the wire source out of the wire feeder itself may be done to allow the user to weld longer without a wire change over since larger spools may be used at the power source and/or in external (dedicated) wire sources compared to the spool that may be used within the wire feeder, which may need to be kept light, especially when worn by or attached to the user.

In some implementations, where such an external wire source is used, the wire source may be configured so it may also be attachable or mountable (e.g., to the user, to a fixed structure near the worksite, etc.), such by incorporating suitable attachment components, which may be similar to the attachment components described herein in conjunction with the wire feeder/drive system. Thus, a user may be carry (e.g., wear) separately each of the wire feeder/drive system and wire source. Alternatively, one of the two components (e.g., the wire source) may be placed on the floor, or mounted to a structure or object nearby, while the other component (e.g., the wire feeder itself) is worn or otherwise attached to the user. To facilitate use of such external (dedicated) wire source, the wire feeder/drive system may incorporate suitable means for connecting to the external (dedicated) wire source. In some implementations, the wire feeder/drive system may be configured for complete distributed arrangement, such as by support use of separate wire, power supply, and gas supply sources.

In some example implementations, an alternate design may be used, with a configurable wire feeder/drive system, such as allowing for selecting between different options when it comes to the wire source. This may be done to allow a user to choose a spool integrated with a feeder/drive system or keep in in the power supply.

In some example implementations, an alternate design of the holstering system may be used, particularly by utilizing design where the wire feeder/drive system, or at least a portion thereof, may rotate or move in multiple directions, axes, and/or planes. For example, instead of clip/disc based design described herein, a ball and socket joint based design, pivot point(s) based design, multiple joint based design, a universal joint based design, etc. may be used as long as they may allow for movement or rotation of the wire feeder/drive system, or at least a portion thereof, particularly to allow for maintaining optimal bend (thus maximized radius) in the torch (connector).

In some example implementations, an alternate design may be used, with power required to operate the wire feeder/drive system (e.g., to run motor(s) used therein) being obtained by tapping off the welding conductor instead of the control lines. Such designs may require use of additional components, such as power connector/receptor and separate power control circuit(s) (e.g., for the motors) in the wire feeder/drive system, but would allow the system to be independent with respect to the power supply required thereby, and thus resolve backward compatibility concerns.

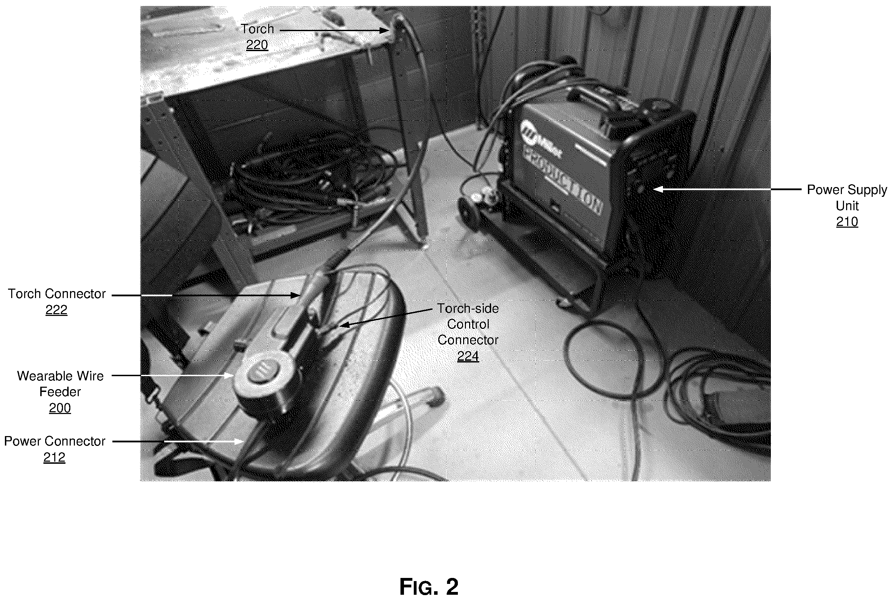

Example implementation(s) based on the present disclosure and additional details related thereto are described in more detail below with respect to FIGS. 2-6.

Nonetheless, while various implementations based on the present disclosure are illustrated and/or described in conjunction with use of MIG guns and aluminum wires, the disclosure is not limited to such arrangement, and solutions based on the present disclosure may also be used with other types of wires and/or welding torches. In this regard, a huge benefit of wearable wire feeders based on based on the present disclosure is providing the ability to feed wire made of the soft material, such as aluminum wire, to the welding work piece and be able to use the smaller MIG gun with the problems of feeding aluminum through a typical 10 ft. (or longer) MIG gun being mitigated, similar wearable wire feeders may be used to support use of other wire types in conjunction with the MIG process (e.g. mild steel and stainless steel) allowing for similar benefits in terms of enabling to welder farther from the main welding equipment (e.g., the power supply) and/or in a more remote manner. Similarly, wearable wire feeders based on based on the present disclosure may be implemented and/or configured for use with other types of welding process, such as flux-cored wire welding (FCAW). In this regard, with FCAW based process, the shielding atmosphere is developed as the welding arc burns the tubular filler metal wire that has the shielding agent in its core. As such, this process eliminates the need for the external shielding gas supply. FCAW is also more beneficial in some outdoor applications where the welding arc may be exposed to the wind and have the shielding gas blown away. The wires used in FCAW even may be more suited to solutions based on the present disclosure as the shielding agent is created in the welding arc itself.

FIG. 1C illustrated alternative example arrangements for incorporating a wearable wire feeder. Referring to FIG. 1C, there are shown example welding-type setups 180, 182, and 184, each of which represents modified arrangement of the welding-type setup 100 as shown in FIG. 1B, to incorporate use of a wearable wire feeder implemented based on the present disclosure, as described herein.

In this regard, the setup 180 illustrates use of a wearable wire feeder with an integrated wire source-that is, where the wire source (e.g., wire spool) is integrated within the wearable wire feeder itself, with the power supply unit providing only power (and, optionally, shielding gas).

The setup 182 illustrates use of an wearable wire feeder in conjunction with a detached (external) wire source (e.g., wire spool)-that is, where the wire source is separate (physically) from and is external to the wearable wire feeder itself, with the power supply unit providing only power (and, optionally, shielding gas).

The setup 184 illustrates use of a wearable wire feeder with a power supply unit with an integrated wire source-that is, where the wire source (e.g., wire spool) is integrated within the power supply unit itself, with the power supply unit providing the wire and power (and, optionally, shielding gas). In such a setup, the power supply unit may lack a dedicated (integrated) wire feeder unit.

FIG. 2 illustrates an example wearable wire feeder and use thereof in an example welding-type setup. Referring to FIG. 2, there is shown an example wearable wire feeder 200 that is incorporated into a MIG based welding-type setup.

The wearable wire feeder 200 may be configured to provide wire feed during welding-type operations, particularly MIG based welding, and to do so in accordance with the present disclosure such that it may allow for longer leads while overcoming the limitations of any existing conventional solutions. In this regard, as illustrated in FIG. 2, the wearable wire feeder 200 may be implemented as a separate physical device, comprising a wire feed system (e.g., components similar and/or equivalent to the combination of the wire roll 150 and the wire-feed unit 140 in the welding-type setup 100), and may be configured to support being connected to a power supply unit 210 (e.g., comprising components similar and/or equivalent to the combination of the power supply unit 120 and (optionally) the gas supply unit 110 in the welding-type setup 100) at one end, such as via one or more first-side connectors (e.g., the power connector 212), and to a torch (e.g., MIG gun) 220 at other end, such as via one or more second-side connectors (e.g., torch connector 222 and torch-side control connector 224), thus allowing for greater distances between the torch and the power supply than is possible in conventional setups, as described herein. To that end, the wearable wire feeder 200 may incorporate one or more first-side ports or outlets, configured to receive or otherwise engage the one or more first-side connectors, and one or more second-side ports or outlets, configured to receive or otherwise engage the one or more second-side connectors.

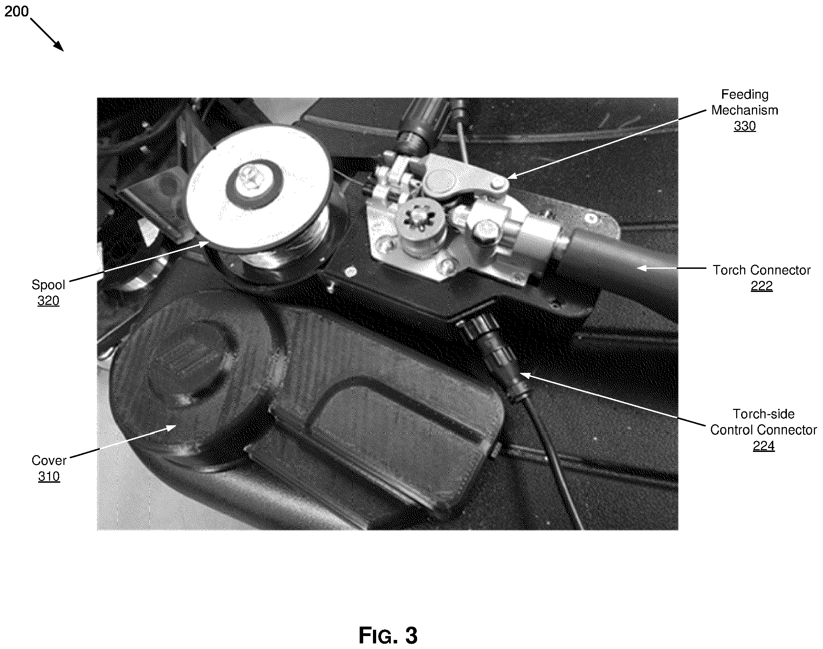

FIG. 3 illustrates an example wearable wire feeder and use thereof in an example welding-type setup. Referring to FIG. 3, there is shown the wearable wire feeder 200 described with respect to FIG. 2. In this regard, illustrated in FIG. 3 are some of the features and/or component of the wearable wire feeder 200 in accordance with an example embodiment thereof.

In particular, the wearable wire feeder 200 may incorporate a removable cover 310, which is shown in FIG. 3 in the removed state, thus exposing the interior of the wearable wire feeder 200, thus showing a wire spool 320 and a feeding mechanism 330 that feeds the wire from the wire spool 320 into the torch 220 (not shown) via the torch connector 222. As noted, however, in some implementations the wire spool may not be incorporated directly into (within) the feeder/drive system, and as such in these implementation the wire spool would be external to the feeder/drive system, being placed at the power supply unit instead or simply connected to the feeder/drive system. Also shown in FIG. 3 is the torch-side control connector 224 when plugged into the wearable wire feeder 200, such that user input at the torch 220 may be communicated to the wearable wire feeder 200, to enable controlling the feeding mechanism 330, for example.

FIG. 4 illustrates an example wearable wire feeder during example use thereof. Referring to FIG. 4, there is shown the wearable wire feeder 200 as described herein, particularly during an example use thereof.

In particular, as shown in the example use scenario illustrated in FIG. 4, the wearable wire feeder 200 may be connected to the torch (MIG gun) 220, with the torch connector 222 plugged into or otherwise coupled to corresponding suitable receptor in the wearable wire feeder 200. Further, the torch-side control connector 224 similarly may be plugged into or otherwise coupled to corresponding suitable receptor in the wearable wire feeder 200, as illustrated in FIG. 3. In this regard, as noted the torch-side control connector 224 may communicate to the wearable wire feeder 200 user inputs or commands (or corresponding data) from the torch 220, such as in response to the user providing commands or input at the torch 220-e.g., via a trigger mechanism, button(s), or the like. Such communication may enable conveying information pertinent to setting or adjusting the wire feeding operations, such as the feed speed.

While note shown in FIG. 4, the wearable wire feeder 200 is also connected, on the other end, to the power supply unit 210, with the power connector 212 plugged into or otherwise coupled to corresponding suitable receptor in the wearable wire feeder 200. In addition, while not shown, in some instances, a separate power-side control connector may be used, connecting the wearable wire feeder 200 to the power supply unit 210 in the same manner as the torch-side control connector 224, to enable communication of control messages or data between the wearable wire feeder 200 to the power supply unit 210, particularly control messages and/or data pertaining to or otherwise affecting wire feeding related functions.

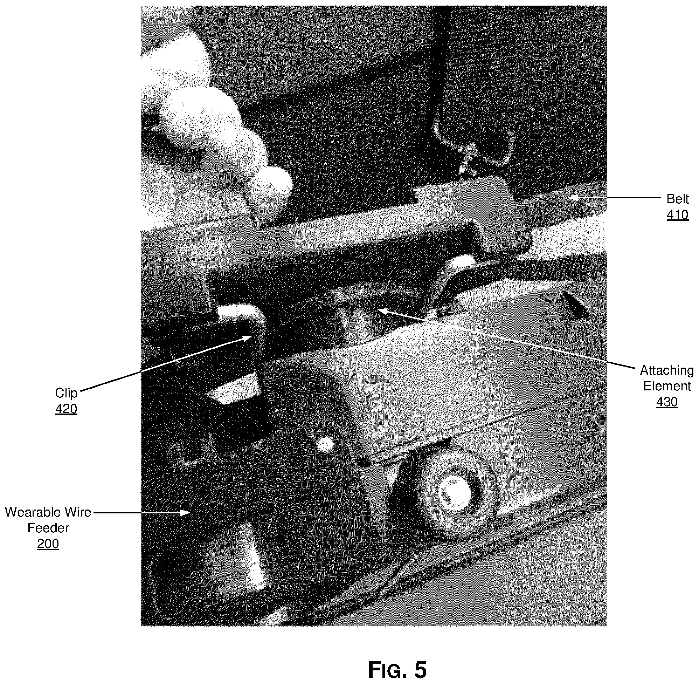

Once connected to both of the torch 220 and the power supply unit 210, welding operating may commence. In this regard, in some instances the wearable wire feeder 200 may effectively operate, from the perspective of the power supply unit 210, as if it is a spool gun, and as such the power-side control connector mentioned above may be configured to interact with the power supply unit 210 in the same manner that a spool gun may do. As noted in some instances, the wearable wire feeder 200 may be worn by the user. To that end, as noted additional systems (e.g., holstering system) may be used, such in conjunction with features or components of the wearable wire feeder 200 itself. For example, as illustrated in FIG. 4, a holster may be worn by the user, comprising a belt 410 (e.g., any suitable tool belt), optionally with shoulder straps, onto which a buckle (or similar component) comprising a clip 420 may be integrated or otherwise engaged. The wearable wire feeder 200 may then be attached to the clip 420. To that end, as shown the wearable wire feeder 200 may incorporate an attaching element 430. In this regard, the attaching element 430 may be configured for engaging and facilitating attaching to the holster system. For example, the attaching element 430 may have a double-disc structure, with an inner disc having diameter that fits within the clip 420, and an outer disc having larger diameter than the clip 420, to ensure that the attaching element 430 remains within the clip 420. This is illustrated in more detail in FIG. 5. As such, this double-disc structure may ensure the attaching element 430 (and thus the wearable wire feeder 200 as a whole) remains engaged with the clip 420, but move freely relative thereto. In this regard, the characteristics of the attaching element 430 (e.g., size and shape) may be set to allow the attaching element 430, and thus the wearable wire feeder 200 as a whole, to move freely within the clip 420. This may be desirable to allow maintaining larger bend radius as described above.

In some implementations the wearable wire feeder may be configured to provide wire based on control input. For example, the wearable wire feeder may receive motor speed control. In this regard, in the welding process, the delivery of the filler metal (e.g., welding wire) may need to be performed in a controlled manner dependent upon, e.g., the particular weld process, work piece thickness, etc. Such control may be, e.g., in the form of the speed at which the wire is fed. One example of such control input is wire feed speed (WFS). In this regard, WFS is a function of the wire feed motor speed, which is dependent upon the voltage supplied to the armature of the motor.

For example, the wearable wire feeder (e.g., the wearable wire feeder 200) may be configured to receive the motor control voltage from a WFS control circuit in the welding power supply (e.g., welding power supply 210). The motor control voltage may be delivered using existing or dedicated connectors or cables in the welding-type system or setup. For example, the voltage may be delivered by two of four control wires that are connected to the welding power supply via a 4-pin connector and are coaxially embedded in the power cable (e.g., the power connector 212) that goes back to the welding power supply. The other two wires may be used for other control input, such as the gun trigger. In this regard, the other two wires in such 4-wire arrangement, may be used as the gun trigger signal leads, which carry the signal(s) for enabling/disabling the welder power output. The trigger signal from the welding gun trigger may be passed through these leads to the welding power supply. The welding gun trigger is connected to the 4-pin torch-side connector, as shown Figs. 2-4. With such control scheme, the WFS control is set at the welder and is transmitted to the motor armature in the feeder.

However, the disclosure is not limited to such implementation for motor control scheme, and any other suitable implementation may be used. For example, in an alternate implementation of the motor control scheme a motor control circuit may be added, such as in the feeder itself, so that the WFS may be controlled remotely. However, such implementation would require the addition of control circuitry and a WFS knob on the feeder. The motor control would be set at maximum at the power source and the control in the feeder would attenuate it to the desired level.

In another alternate implementation full motor control functionality may be incorporated and/or built into the feeder, with that full motor control functionality powered from, e.g., the welding arc. Such scheme would provide a full remote control of the WFS that wouldn't be dependent on the setting of the WFS at the welder. Such scheme would also enable the feeder to be used on welders that don't have the typical spool gun style of control (e.g., via the 4-pin connector as described above). Such scheme may particularly adaptable for use in welding-type systems or setup that are driven using batteries (or similar power storage devices), and/or which may not have an internal wire feed speed control.

In some instances, a locking mechanism optionally may also be used to ensure that that the wearable wire feeder 200 remains locked and secured after engaging the clip 420.

Further, in some instances, the combination of the double-disc based attaching element 430 and the clip 420 may be used to attach or mount the wearable wire feeder 200 to a fixed structure or object rather than the user. For example, the clip 420, alone or in combination with the belt 410 (or using a different holstering system), maybe attached to the fixed structure or object, with the wearable wire feeder 200 engaging the clip 420, using the attaching element 430, in the same manner described herein. The wearable wire feeder 200 may similarly be able to move freely when mounted to the fixed structure or object.

It should be understood that the disclosure is not limited to the clip/disc based design described herein, which may allow for rotation only in one plane, and other suitable designs may be used. For example, as noted, in some example implementations, a ball and socket joint based design or other suitable designs may be used instead, which may have the added benefit of allowing movement (e.g., rotation) in multiple directions, axes, and/or planes.

Further, while the wearable wire feeder 200 is shown with a wire spool integrated therein (within the enclosure of the wearable wire feeder 200), the disclosure is not limited to such arrangement. For example, as described above, in some implementations, the wire source may be provided as a separate physical component, which may be done to allow using longer spool than would otherwise fit within the enclosure. In such implementations, the wire source may be configured so it may also be attachable or mountable-e.g., to the user, to a fixed structure near the worksite, etc. For example, the wire source similarly may incorporate suitable attachment components, which may be configured to enable attaching or mounting the wire source, such as to the holstering system used by the user, in similar manner as described herein, or may simply incorporate separate carrying or attaching components (e.g., straps or the like). For example, the wire source may be configured to worn in similar manner as a backpack. In this regard, because the wire source may be heavier, it may be more desirable to carry it on the back. Alternatively, the wire source may simply be configure for attaching or mounting to a structure or object, or simply for placement on the floor nearby, with only the wearable wire feeder 200 (comprising only the wire feeding mechanism and other components) being carried or attached to the user.

FIG. 5 illustrates an example engagement for engaging a wearable wire feeder during use thereof. Referring to FIG. 5, there is shown the wearable wire feeder 200 as described herein, when engaged onto the belt 410 as described with respect to FIG. 4. In particular, illustrated in FIG. 5 is the details of the engagement between the clip 420 and the attaching element 430. In this regard, as would be readily discerned from FIG. 5, the attaching element 430 engages the clip 420 such that it (and the wearable wire feeder 200 as a whole) may rotate freely within the clip 420, thus allowing for maintaining the bend radius, or at least to limit any reduction in the bend radius, as descried herein. Another advantage of an arrangement such as the one illustrated in FIGS. 4 and 5 is that it may accommodate both right-handed and left-handed users as the wearable wire feeder 200 may simply be flipped when used by a left-handed user, with the circular attaching element 430 being able to engage the clip 420 once placed on the left-side in substantially similar manner as shown in FIG. 5.

FIG. 6 illustrates an example use of a wearable wire feeder demonstrating reposition-ability of the wearable wire feeder. Referring to FIG. 6, there is shown the wearable wire feeder 200 as described herein. In particular, as shown in FIG. 6, the wearable wire feeder 200 is engaged onto a harnessing system (e.g., the belt 410 as described with respect to FIG. 4, with shoulder straps).

As illustrated in FIG. 6, the combination of the wearable wire feeder 200 and the harnessing system may allow for re-positioning of the wearable wire feeder 200, such as from the side (600) to the back (610), with the characteristics of the arrangements-e.g., the rotate-ability of the wearable wire feeder 200 as attached, the length and flexibility of the torch connector, etc., allowing for use of the torch whether the wearable wire feeder 200 is on the side or the back.

FIG. 7 illustrates an example use of a wearable wire feeder demonstrating limiting of reduction in bend radius of torch connector when moving the wearable wire feeder. Referring to FIG. 7, there is shown the wearable wire feeder 200 as described herein. In particular, as shown in FIG. 7, the wearable wire feeder 200 is engaged onto a harnessing system (e.g., the belt 410 as described with respect to FIG. 4, with shoulder straps). In particular, the wearable wire feeder 200 may be engaged onto the harnessing system using clip-based attachment as described with respect to FIGS. 4-5.

As illustrated in FIG. 7, the combination of the wearable wire feeder 200 and the harnessing system may allow the wearable wire feeder 200 to move in one or more directions (e.g., rotate along a plane corresponding to the clip 420). Such movement-that the ability of the wearable wire feeder 200 to rotate, such as when the user moves his/her arm from down position (700) to up position (710), as shown in FIG. 7-may allow for maintaining the radius in the bend of the torch connector, or at least liming any reduction in the bend radius. This maintaining of bend radius (or at least limiting of any reduction thereof) may be beneficial to ensure that the wire does bind or is otherwise affected as it is fed from the wearable wire feeder 200 to the tip of the torch.

Other implementations in accordance with the present disclosure may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the processes as described herein.

Accordingly, various implementations in accordance with the present disclosure may be realized in hardware, software, or a combination of hardware and software. The present disclosure may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip.

Various implementations in accordance with the present disclosure may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present disclosure has been described with reference to certain implementations, it will be understood by those skilled in the art that various changes may be made and equivalents may be substituted without departing from the scope of the present disclosure. For example, block and/or components of disclosed examples may be combined, divided, re-arranged, and/or otherwise modified. In addition, many modifications may be made to adapt a particular situation or material to the teachings of the present disclosure without departing from its scope. Therefore, it is intended that the present disclosure not be limited to the particular implementation disclosed, but that the present disclosure will include all implementations falling within the scope of the appended claims.
Certain embodiments of the invention are described in the following clauses:
Clause 1. A welding-type system, comprising:
   a wire feeder device configured for operation in conjunction with a welding-type power supply unit and a welding-type torch;
   wherein the wire feeder device is a physically separate component from both of the welding-type power supply unit and the welding-type torch;
   wherein the wire feeder device comprises, at least:
      a wire source configured to provide electrode wire;
      a wire feeding mechanism configured to feed the electrode wire from the wire source;
   wherein the wire feeder device is powered by the welding-type power supply unit; and
   wherein the wire feeder device is configured to feed the electrode wire to the welding-type torch.
Clause 2. The welding-type system according to clause 1, wherein the wire feeder device is configured to control the wire feeding mechanism based on control input received from the welding-type torch.
Clause 3. The welding-type system according to clause 1, wherein the wire feeder device comprises an enclosure that encloses the wire feeding mechanism, and wherein wire source is integrated or inserted within the enclosure.
Clause 4. The welding-type system according to clause 1, wherein the wire feeder device comprises an enclosure that encloses the wire feeding mechanism, and wherein the wire source is external to the enclosure.
Clause 5. The welding-type system according to clause 4, wherein the wire feeder device comprises a coupling mechanism and/or connector for engaging the wire source.
Clause 6. The welding-type system according to clause 1, wherein the wire source comprises a wire spool that is inserted within or coupled to the wire feeder device.
Clause 7. The welding-type system according to clause 1, wherein the wire feeder device is configured for attaching or mounting to a user of the welding-type system, or to a fixed object or structure.
Clause 8. The welding-type system according to clause 7, wherein the wire feeder device comprises an attachment element configured for enabling or supporting the attaching or mounting of the wire feeder device.
Clause 9. The welding-type system according to clause 7, wherein the attaching or mounting of the welding-type system comprises use of a holstering or strapping system, and wherein the wire feeder device is configured to engage the holstering or strapping system.
Clause 10. The welding-type system according to clause 9, wherein the holstering or strapping system comprises a belt or a harness comprising or engaging a clip, and wherein the wire feeder device comprises an attachment element configured to engage the clip.
Clause 11. The welding-type system according to clause 7, wherein the wire feeder device is configured to enable making the attaching or mounting rotatable in one or more directions, axes, and/or planes.
Clause 12. The welding-type system according to clause 11, wherein the wire feeder device is configured to enable making the attaching or mounting rotatable such that a reduction in a bend radius of a connector used in feeding the electrode wire to the welding-type torch is prevented or limited.
Clause 13. The welding-type system according to clause 7, wherein the wire feeder device is configured to enable making the attaching or mounting repositionable.
Clause 14. The welding-type system according to clause 7, wherein the wire source is a separate physical component, and wherein the wire source is configured for attaching or mounting separately to the user of the welding-type system, or to same or another fixed object or structure.
Clause 15. The welding-type system according to clause 1, wherein the welding-type system comprises a metal inert gas (MIG) welding based system.
Clause 16. The welding-type system according to clause 15, wherein the welding-type torch comprises a MIG gun.
Clause 17. A welding-type system, comprising:
   a wire feeder device configured for operation in conjunction with a welding-type power supply unit and a welding-type torch;
   wherein the wire feeder device is a physically separate component from both of the welding-type power supply unit and a welding-type torch;
   wherein the wire feeder device comprises, at least:
      a wire source configured to provide aluminum electrode wire;
      a wire feeding mechanism comprises to feed the aluminum electrode wire from the wire source;
   wherein the wire feeder device is powered by the welding-type power supply unit;
   wherein the wire feeder device is configured to feed the aluminum electrode wire to the welding-type torch; and
   wherein the wire source is arranged such that a distance between the wire source and a nozzle of the welding-type torch is at least a pre-determined minimum distance for reducing wire wobbling occurs during operation.
Clause 18. The welding-type system according to clause 17, wherein the pre-determined minimum distance is at least 3 feet for the aluminum electrode wire when the wire source comprises a wire spool.
Clause 19. The welding-type system according to clause 17, wherein the welding-type system comprises a metal inert gas (MIG) welding based system.
Clause 20. The welding-type system according to clause 19, wherein the welding-type torch comprises a MIG gun.

## Claims

1. A welding-type system, comprising:
a wire feeder device configured for operation in conjunction with a welding-type power supply unit and a welding-type torch;
wherein the wire feeder device is a physically separate component from both of the welding-type power supply unit and the welding-type torch;
wherein the wire feeder device comprises, at least:
a wire source configured to provide electrode wire;
a wire feeding mechanism configured to feed the electrode wire from the wire source;
wherein the wire feeder device is powered by the welding-type power supply unit; and
wherein the wire feeder device is configured to feed the electrode wire to the welding-type torch.

2. The welding-type system according to claim 1, wherein the wire feeder device is configured to control the wire feeding mechanism based on control input received from the welding-type torch.

3. The welding-type system according to claim 1, wherein the wire feeder device comprises an enclosure that encloses the wire feeding mechanism, and wherein wire source is integrated or inserted within the enclosure.

4. The welding-type system according to claim 1, wherein the wire feeder device comprises an enclosure that encloses the wire feeding mechanism, and wherein the wire source is external to the enclosure, and optionally wherein the wire feeder device comprises a coupling mechanism and/or connector for engaging the wire source.

5. The welding-type system according to claim 1, wherein the wire source comprises a wire spool that is inserted within or coupled to the wire feeder device.

6. The welding-type system according to claim 1, wherein the wire feeder device is configured for attaching or mounting to a user of the welding-type system, or to a fixed object or structure.

7. The welding-type system according to claim 6, wherein the wire feeder device comprises an attachment element configured for enabling or supporting the attaching or mounting of the wire feeder device.

8. The welding-type system according to claim 6, wherein the attaching or mounting of the welding-type system comprises use of a holstering or strapping system, and wherein the wire feeder device is configured to engage the holstering or strapping system, and optionally wherein the holstering or strapping system comprises a belt or a harness comprising or engaging a clip, and wherein the wire feeder device comprises an attachment element configured to engage the clip.

9. The welding-type system according to claim 6, wherein the wire feeder device is configured to enable making the attaching or mounting rotatable in one or more directions, axes, and/or planes, and optionally wherein the wire feeder device is configured to enable making the attaching or mounting rotatable such that a reduction in a bend radius of a connector used in feeding the electrode wire to the welding-type torch is prevented or limited.

10. The welding-type system according to claim 6, wherein the wire feeder device is configured to enable making the attaching or mounting repositionable.

11. The welding-type system according to claim 6, wherein the wire source is a separate physical component, and wherein the wire source is configured for attaching or mounting separately to the user of the welding-type system, or to same or another fixed object or structure.

12. The welding-type system according to claim 1, wherein the welding-type system comprises a metal inert gas (MIG) welding based system, and optionally wherein the welding-type torch comprises a MIG gun.

13. A welding-type system, comprising:
a wire feeder device configured for operation in conjunction with a welding-type power supply unit and a welding-type torch;
wherein the wire feeder device is a physically separate component from both of the welding-type power supply unit and a welding-type torch;
wherein the wire feeder device comprises, at least:
a wire source configured to provide aluminum electrode wire;
a wire feeding mechanism comprises to feed the aluminum electrode wire from the wire source;
wherein the wire feeder device is powered by the welding-type power supply unit;
wherein the wire feeder device is configured to feed the aluminum electrode wire to the welding-type torch; and
wherein the wire source is arranged such that a distance between the wire source and a nozzle of the welding-type torch is at least a pre-determined minimum distance for reducing wire wobbling occurs during operation.

14. The welding-type system according to claim 13, wherein the pre-determined minimum distance is at least 3 feet for the aluminum electrode wire when the wire source comprises a wire spool.

15. The welding-type system according to claim 13, wherein the welding-type system comprises a metal inert gas (MIG) welding based system, and optionally wherein the welding-type torch comprises a MIG gun.
